# EUROPEAN PATENT SPECIFICATION

(11) **EP 3 287 355 B1**
(45) Date of publication and mention of the grant of the patent: **12.08.2020**
(21) Application number: 16782786.4
(22) Date of filing: 15.04.2016
(51) Int. Cl.: B62M 6/55, B60L 15/20, B62M 1/10, F16D 41/12

(54) **ELECTRIC BICYCLE AND HUB DEVICE FOR ELECTRIC BICYCLES**
ELEKTRISCHES FAHRRAD UND NABENVORRICHTUNG FÜR ELEKTRISCHE FAHRRÄDER
VÉLO ÉLECTRIQUE ET DISPOSITIF DE MOYEU POUR VÉLOS ÉLECTRIQUES

(30) Priority: 20.04.2015 JP 2015085509
(43) Date of publication of application: 28.02.2018
(73) Proprietor: Panasonic Intellectual Property Management Co., Ltd., Osaka-shi, Osaka 540-6207 (JP)
(72) Inventor: KAWAKAMI, Masafumi, Osaka-shi, Osaka 540-6207 (JP); YOSHIMURA, Masaya, Osaka-shi, Osaka 540-6207 (JP)
(74) Representative: Grünecker Patent- und Rechtsanwälte PartG mbB
(86) International application number: PCT/JP2016/002047
(87) International publication number: WO 2016/170762

(56) References cited:
- JP-A- 2012 025 328
- JP-A- 2012 201 134
- JP-A- 2013 216 230

## Description

### TECHNICAL FIELD

The present invention relates to an electric bicycle and a hub device for electric bicycles, and more particularly to an electric bicycle and a hub device for electric bicycles capable of performing regenerative operation. A generic electric bicycle according to the preamble of claim 1 is for instance known from JP 2012 025328 A.

### BACKGROUND ART

There has been known an electric bicycle (also called electric assist bicycle) which includes a battery constituting a power source, and a driving unit equipped with a motor operable by power supply from the battery, and even on an upslope or the like, can easily travel with a combination of human driving force generated by pedal force applied to pedals and auxiliary driving force (assist force) generated by the driving unit. This type of electric bicycle includes such an electric bicycle known as a type capable of performing "regenerative operation" which transmits rotational force of wheels during traveling on a downslope or the like (also referred to as passive rotational force) to the motor, and produces regenerative power by using the motor as a power generator to charge the battery and increase a traveling distance per battery charging.

For example, PTL 1 discloses a bicycle hub gear unit included in an electric bicycle of the foregoing type capable of performing regenerative operation. According to this bicycle hub gear unit, a hub body (hub shell) and a rear wheel sprocket (rotation wheel body provided on rear wheel and engaging with chain, hereinafter referred to as rear sprocket) are configured to rotate with each other as a one-piece body, and output passive rotational force from the rear sprocket to an outside when passive rotational force is applied from a contact surface to the wheel during traveling on a downslope or the like.

With this configuration, passive rotational force is transmitted from the rear sprocket to the motor included in the driving unit via the chain to perform regenerative operation. When passive rotational force is applied from the contact surface to the wheel (rear wheel) during traveling on a downslope or the like, the rear sprocket rotates at the same rotation speed as the rotation speed of the wheel to output the passive rotational force.

A bicycle wherein a motor force is transmitted via an auxiliary sprocket to a chain is described in JP 2012 201134 A.

### Citation List

### Patent Literature

PTL 1: Unexamined Japanese Patent Publication No. 2011-16479

### SUMMARY OF THE INVENTION

According to the hub gear unit for bicycles disclosed in PTL 1, the rear sprocket is configured to rotate at the same rotation speed as the rotation speed of the wheel and output passive rotational force to the chain or the like. When this structure is adopted, however, regenerative operation is difficult to perform by an electric bicycle traveling in a high speed range (e.g., 30 km per hour or higher) during coasting (or moving without power) on a downslope or the like for the following reason. Moreover, a cut-off device such as a field effect transistor (FET) for cutting off connection between the motor and the battery is needed.

When the electric bicycle travels at a high speed (e.g., 30 km per hour or higher) during coasting on a downslope or the like, the rotation speed of the wheel may exceed 300 rpm (revolutions per minute), for example. Accordingly, when passive rotational force generated by rotation of the rear sprocket at the same rotation speed as the rotation speed of the wheel is output and transmitted to the chain, the motor rotates at a rotation speed considerably larger than a no-load maximum rotation speed (maximum rotation speed of the motor in no-load state). In this case, continuous regenerative operation performed in the foregoing state may adversely affect the battery. Accordingly, regenerative operation of the motor needs to be stopped by cutting off electric connection between the battery and the motor by using the cut-off device.

Therefore, the battery is difficult to charge due to the non-regenerative condition during high-speed traveling such as coasting on a downslope. Moreover, braking accompanied with regenerative operation is difficult to achieve during high-speed traveling, for example. Furthermore, the necessity of the cut-off device such as FET, or a large-scale cut-off device may raise a manufacturing cost or increase a heat generation amount.

Provided according to the present invention are an electric bicycle and a hub device for electric bicycles capable of performing regeneration even during high-speed traveling, and achieving size reduction by eliminating a necessity of FET or other types of cut-off device for cutting off regenerative operation.

In particular, it is provided an electric bicycle having the features defined in claim 1. Further preferred embodiments are defined in the dependent claims.

With this configuration, the speed of the passive rotational force transmitted from the one wheel to the hub body is reduced to a speed lower than the rotation speed of the hub body while the passive rotational force passes through the passive rotational force speed reduction transmission path. Thereafter, the passive rotational force having the reduced speed is output from the rotation wheel body of the hub device. In this case, the motor is not rotated at a rotation speed considerably higher than a no-load maximum rotation speed, i.e., a maximum rotation speed of the motor in no-load state, even during high-speed traveling of the electric bicycle, such as coasting on a downslope. Accordingly, a possibility of imposition of adverse effects on a battery is eliminated, or reduced to a minimum even when regenerative operation is continued.

In the following there are described some arrangements. However, there may be described some arrangements which are only helpful for understanding the present invention. The scope of protection is defined by the claims.

### BRIEF DESCRIPTION OF DRAWINGS

FIG. 1 is a right side view of an entire appearance of an electric bicycle according to an arrangement.
FIG. 2 is a partial right side view of the electric bicycle according to the arrangement.
FIG. 3 is a right side view of a driving unit of the electric bicycle according to the arrangement.
FIG. 4 is a planar cross-sectional view of the driving unit of the electric bicycle according to the arrangement.
FIG. 5 is a planar cross-sectional view illustrating a main part of the driving unit of the electric bicycle according to the arrangement.
FIG. 6 is a view schematically illustrating a handlebar and brake devices of the electric bicycle according to the arrangement.
FIG. 7 is a vertical cross-sectional view of a hub device (rear hub device) of the electric bicycle according to the arrangement.
FIG. 8 is a cross-sectional view taken along a line 8-8 in FIG. 7 as viewed in a direction of arrows (right side cross-sectional view during normal driving).
FIG. 9 is a cross-sectional view taken along a line 9-9 in FIG. 7 as viewed in a direction of arrows (right side cross-sectional view during normal driving).
FIG. 10 is a cross-sectional view taken along a line 10-10 in FIG. 7 as viewed in a direction of arrows (right side cross-sectional view during normal driving).
FIG. 11 is a cross-sectional view taken along a line 11-11 in FIG. 7 as viewed in a direction of arrows (right side cross-sectional view during normal driving).
FIG. 12 is a vertical cross-sectional rear view of the hub device (rear hub device) of the electric bicycle according to the arrangement.
FIG. 13 is a cross-sectional view taken along a line 13-13 in FIG. 7 as viewed in a direction of arrows (right side cross-sectional view during regeneration).
FIG. 14 is a cross-sectional view taken along a line 14-14 in FIG. 7 as viewed in a direction of arrows (right side cross-sectional view during regeneration).
FIG. 15 is a cross-sectional view taken along a line 15-15 in FIG. 7 as viewed in a direction of arrows (right side cross-sectional view during regeneration).
FIG. 16 is a cross-sectional view taken along a line 16-16 in FIG. 7 as viewed in a direction of arrows (right side cross-sectional view during regeneration).
FIG. 17 is a cross-sectional view taken along a line 17-17 in FIG. 7 as viewed in a direction of arrows (right side cross-sectional view during regeneration).
FIG. 18 is a cross-sectional view taken along a line 18-18 in FIG. 7 as viewed in a direction of arrows (right side cross-sectional view during regeneration).
FIG. 19 is a vertical cross-sectional rear view of the hub device (rear hub device) of the electric bicycle according to the arrangement.
FIG. 20 is a cross-sectional view taken along a line 20-20 in FIG. 7 as viewed in a direction of arrows (right side cross-sectional view during backward movement).
FIG. 21 is a cross-sectional view taken along a line 21-21 in FIG. 7 as viewed in a direction of arrows (right side cross-sectional view during backward movement).
FIG. 22 is a cross-sectional view taken along a line 22-22 in FIG. 7 as viewed in a direction of arrows (right side cross-sectional view during backward movement).
FIG. 23 is a cross-sectional view taken along a line 23-23 in FIG. 7 as viewed in a direction of arrows (right side cross-sectional view during backward movement).
FIG. 24 is a cross-sectional view taken along a line 24-24 in FIG. 7 as viewed in a direction of arrows (right side cross-sectional view during backward movement).
FIG. 25 is a cross-sectional view taken along a line 25-25 in FIG. 7 as viewed in a direction of arrows (right side cross-sectional view during backward movement).
FIG. 26 is a cross-sectional view taken along a line 26-26 in FIG. 7 as viewed in a direction of arrows (right side cross-sectional view during backward movement).
FIG. 27 is a cross-sectional view taken along a line 27-27 in FIG. 7 as viewed in a direction of arrows (right side cross-sectional view during backward movement).
FIG. 28 is a vertical cross-sectional rear view of a hub device (rear hub device) of an electric bicycle according to another arrangement.
FIG. 29 is an enlarged planar cross-sectional view illustrating a main part of a driving unit of the electric bicycle according to another arrangement.
FIG. 30 is an enlarged planar cross-sectional view illustrating the main part of the driving unit of the electric bicycle according to another arrangement.
FIG. 31 is a planar cross-sectional view of the driving unit of the electric bicycle according to another arrangement.
FIG. 32 is a planar cross-sectional view of the driving unit of the electric bicycle according to another arrangement, which is helpful for understanding the present invention.

### DESCRIPTION OF EMBODIMENTS

An electric bicycle and a hub device for electric bicycles according to exemplary embodiments of the present invention are hereinafter described with reference to the drawings. In following description, a right-left direction and a front-rear direction are directions as viewed from a person riding on the electric bicycle and facing in a traveling direction. It is not intended that the present invention be limited to the exemplary embodiments described herein only by way of example.

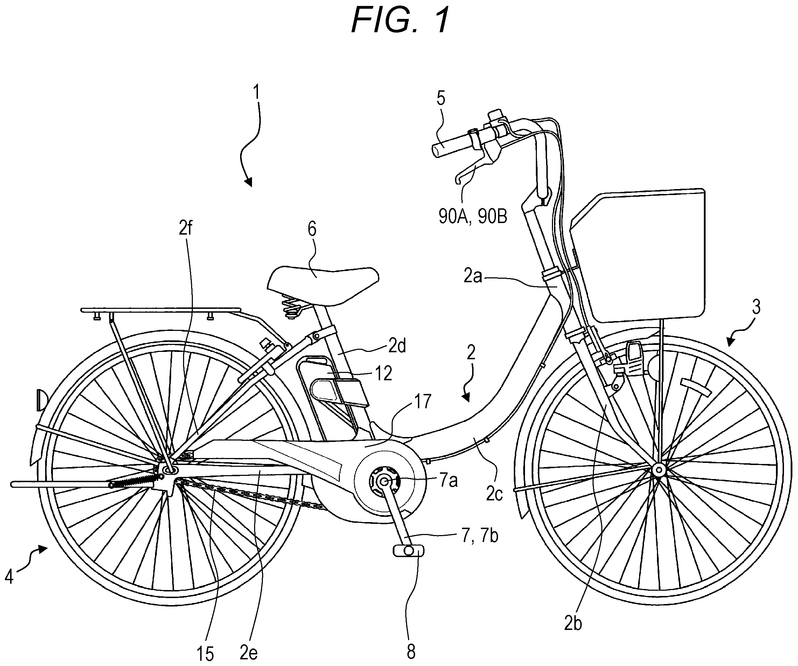

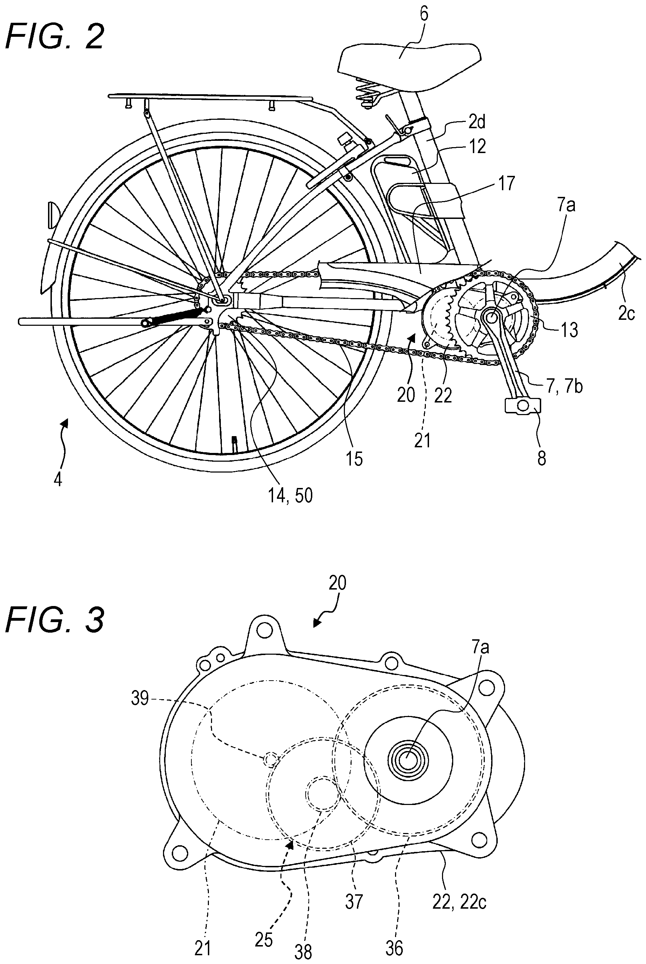

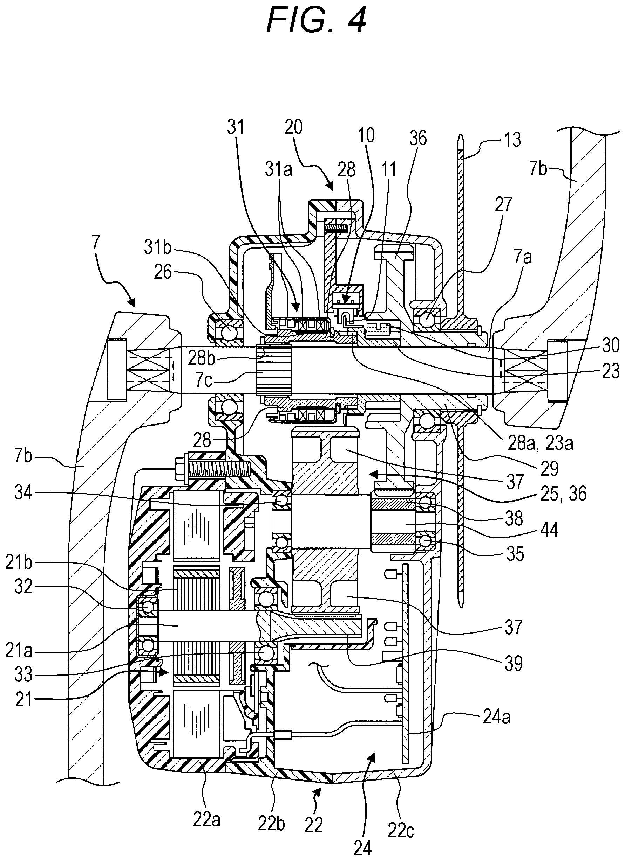

FIGS. 1 and 2 illustrate an electric bicycle according to an arrangement of the present invention. As apparent from FIGS. 1 and 2, electric bicycle 1 includes: metal frame 2 constituted by head tube 2a, front fork 2b, down tube 2c, seat tube 2d, chain stays 2e, seat stays 2f, and others; front wheel 3 rotatably attached to a lower end of front fork 2b; and rear wheel 4 rotatably attached to rear ends of chain stays 2e. Electric bicycle 1 further includes: handlebar 5 operated to change a direction of front wheel 3; saddle 6 for sitting; and crank 7 and pedals 8 to each of which human driving force generated by pedal force is applied. Electric bicycle 1 further includes: driving unit 20 which includes electric motor 21 (see FIG. 4) functioning as a driving source for generating auxiliary driving force (assist force), and controller 24 performing various types of electric control including control of motor 21 (see FIG. 4); and battery 12 constituted by a secondary battery for supplying driving power to motor 21. Electric bicycle 1 further includes front sprocket (also referred to as crank sprocket, front gear, or driving sprocket) 13 which constitutes a driving force output wheel body attached coaxially with crank shaft 7a and rotatable with crank shaft 7a as a one-piece body to output resultant force of human driving force and auxiliary driving force. Electric bicycle 1 further includes: hub device (also referred to as rear hub device) 50 provided at a central portion of rear wheel 4, rear sprocket (also referred to as rear gear) 14 provided on hub device (rear hub device) 50 and constituting a rotation wheel body, a driving force input body, or a passive rotational force output body; chain 15 which functions as an endless force transmitter extended between front sprocket 13 and rear sprocket 14 and endlessly wound around front sprocket 13 and rear sprocket 14 in a rotatable manner; and chain cover 17 for covering a side of chain 15. The pedals are rotatably attached to corresponding crank arms 7b constituting crank 7.

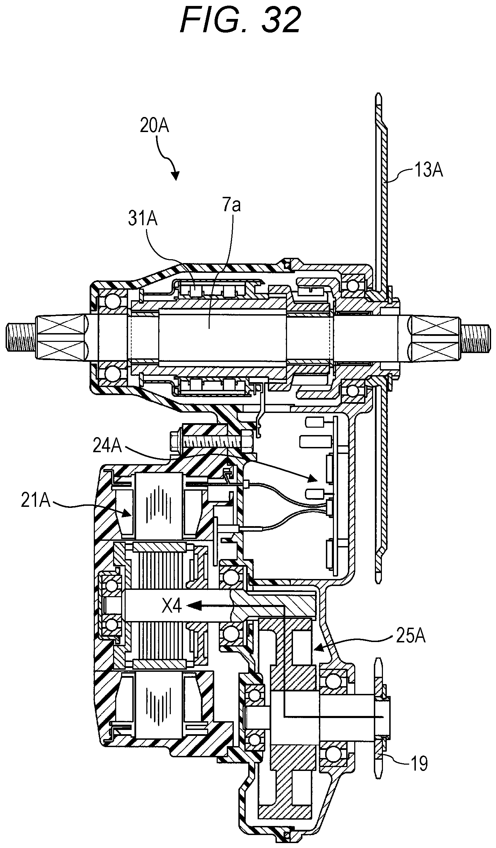

As illustrated in FIGS. 3 through 5, driving unit 20 includes therein: crank shaft 7a which penetrates a front part of driving unit 20 in the right-left direction; motor 21; torque sensor 31 which detects pedal force from pedals 8; speed reduction mechanism 25 which transmits rotation output from motor 21 while reducing a speed of the rotation; and controller 24. Driving unit 20 is fixed near a connection portion between down tube 2c, seat tube 2d, and chain stays 2e of frame 2 (i.e., position of "hanger lug") via a not-shown support bracket. Driving unit 20 is therefore disposed at an intermediate position (i.e., central portion) between front wheel 3 and rear wheel 4. According to this arrangement, driving unit 20 having a relatively large weight is disposed at a center of electric bicycle 1 in the front-rear direction. Accordingly, front wheel 3 and rear wheel 4 are easily raised for easy traveling over a step which may be present on a traveling road. Moreover, handling easiness of a vehicle body (including frame 2) of electric bicycle 1, and traveling stability are both favorable. Driving unit 20 detects pedal force (human driving force) received from pedals 8 by torque sensor 31, and generates auxiliary driving force from motor 21 in accordance with the detected pedal force. Auxiliary driving force is added to human driving force to generate resultant force. The resultant force thus generated is transmitted toward rear wheel 4 (more specifically, rear sprocket 14 of rear wheel 4) via chain 15. According to driving unit 20 of electric bicycle 1, passive rotational force applied to rear wheel 4 from a contact surface is transmitted to chain 15. The passive rotational force transmitted to chain 15 is further transmitted to motor 21 via front sprocket 13 described below (or motor sprocket 19 (see FIG. 32) constituting auxiliary driving force output wheel body described below).

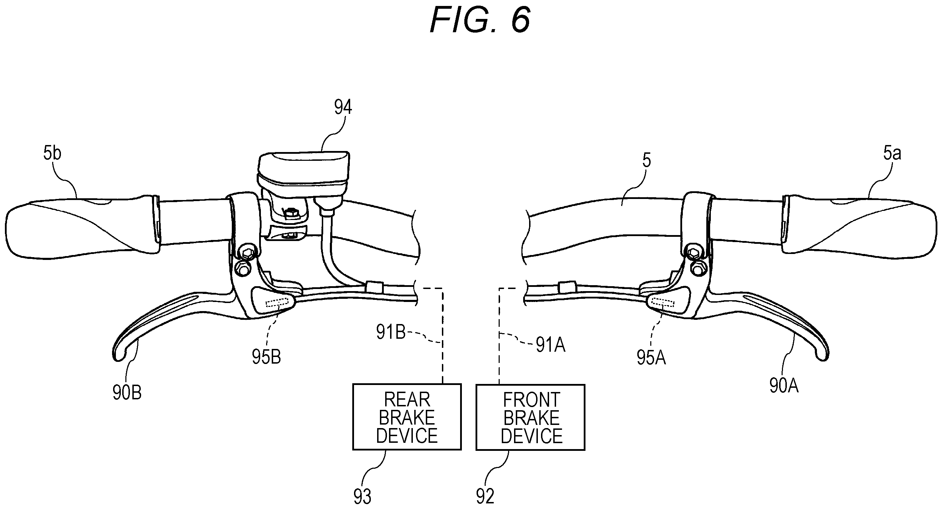

As illustrated in FIG. 6, grips 5a, 5b are attached to right and left ends of handlebar 5, respectively. Right and left brake levers 90A, 90B are attached below grips 5a, 5b, respectively, in a state rotatably supported. Front brake device 92 is connected and physically linked with right brake lever 90A via brake wire 91A to give mechanical braking force to front wheel 3. Rear brake device 93 is connected and physically linked with left brake lever 90B via brake wire 91B to give mechanical braking force to rear wheel 4.

Moreover, the electric bicycle operates motor 21 as a power generator during braking to perform regenerative operation for generating regenerative power from motor 21, and charge battery 12 with the generated power. Operation unit 94 provided on a part of handlebar 5 includes a plurality of switch buttons, such as a switch button for electrically turning on and off addition of auxiliary driving force (i.e., assist operation) or regenerative operation. Brake switches 95A, 95B provided at attachment positions of brake levers 90A, 90B, respectively, detect respective operation states of brake levers 90A, 90B. Controller 24 appropriately controls a regenerative charging function while detecting respective operation states of brake levers 90A, 90B by brake switches 95A, 95B.

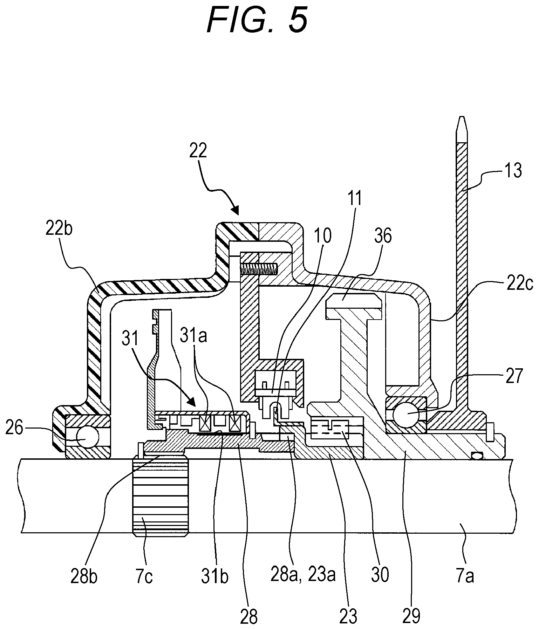

According to electric bicycle 1 described herein, passive rotational force applied to rear wheel 4 from the contact surface is transmitted to chain 15 via hub device (rear hub device) 50 and rear sprocket 14 during traveling without working pedals 8 in a state of substantially no detection of pedal force (i.e., in such a state that neither human driving force nor auxiliary driving force is applied, or is equal to or larger than passive rotational force). In this case, the passive rotational force is transmitted to motor 21 via front sprocket 13 of driving unit 20 to rotate motor 21. Under this situation (referred to as passive traveling), at least either brake lever 90A or 90B is operated. When brake switch 95A, 95B detects this state, controller 24 executes regenerative operation (an example of method for regenerative control). Accordingly, the regenerative operation is executed by utilizing revolutions of motor 21 at this time, so that battery 12 is charged. While pedals 8 are not being worked, chain 15 operates (shifts) in accordance with rotation of rear wheel 4. However, crank shaft 7a, crank arms 7b, and pedals 8 are not allowed to rotate by virtue of unidirectional clutch 30 (see FIGS. 4 and 5) described below and interposed between front sprocket 13 and crank shaft 7a.

According to a structure of a conventional hub device for a rear wheel of an electric bicycle, passive rotational force applied to a rear wheel from a contact surface without working pedals is not transmitted to a rear sprocket. Accordingly, this structure does not transmit passive rotational force to a motor, and therefore does not perform regenerative operation. On the other hand, according to the hub gear unit for bicycles disclosed in PTL 1 (Japanese Unexamined Patent Application Publication No. 2011-16479), passive rotational force applied from a contact surface to the rear wheel during traveling on a downslope or the like can be output from the rear wheel sprocket to the outside by rotations of the hub body (hub shell) and the rear sprocket as a one-piece body. According to the configuration disclosed in PTL 1, therefore, passive rotational force is transmitted from the rear wheel sprocket to the motor included in the driving unit via the chain to perform regenerative operation.

In case of the hub gear unit for bicycles disclosed in PTL 1, however, the rear wheel sprocket rotates at the same rotation speed as the rotation speed of the rear wheel, and passive rotational force is output to the chain. Accordingly, problems arise from the hub gear unit for bicycles disclosed in PTL 1, such as a problem that regenerative operation of an electric bicycle is difficult to perform in a high-speed range (e.g., 30 km per hour or higher) during coasting (i.e., moving without power) on a downslope, and a problem that a cut-off device such as FET for cutting off connection between the motor and the battery is required. There is a further problem that drag of the motor increases during coasting in a state of no pedaling.

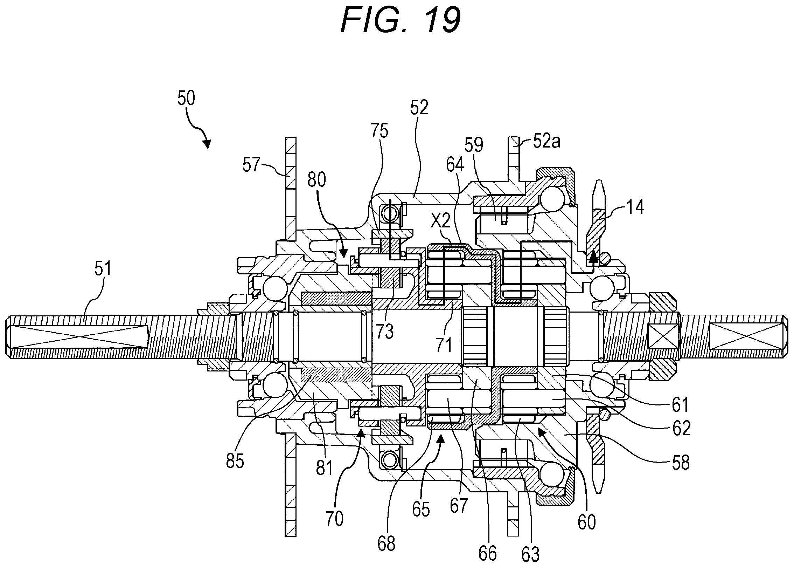

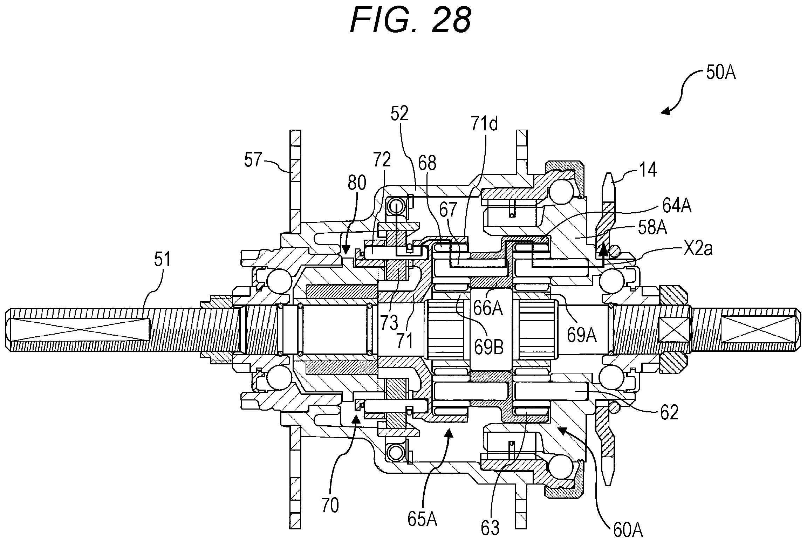

For solving these problems, hub device (rear hub device) 50 for electric bicycles according to the present exemplary embodiment includes hub shaft 51 attachable to frame 2, hub body 52 rotatable around hub shaft 51 and rotatable with rear wheel 4 as a one-piece body, and rear sprocket 14 constituting a rotation wheel body for outputting passive rotational force to driving unit 20. Hub device 50 further includes passive rotational force speed reduction transmission path X2 (see FIG. 19), X2a (see FIG. 28) at which a speed of passive rotational force transmitted to hub body 52 is reduced to a speed lower than a rotation speed of hub body 52 and the passive rotational force having the reduced speed is transmitted to rear sprocket 14. More specifically, according to hub device 50 of the present exemplary embodiment, the speed of the passive rotational force applied from the contact surface to rear wheel 4 and transmitted to rear wheel 4 and hub body 52 is reduced to a rotation speed lower than the rotation speed of hub body 52, and the passive rotational force having the reduced speed is transmitted to rear sprocket 14 and chain 15, in a state that neither human driving force nor auxiliary driving force is applied to chain 15 without working pedals 8.

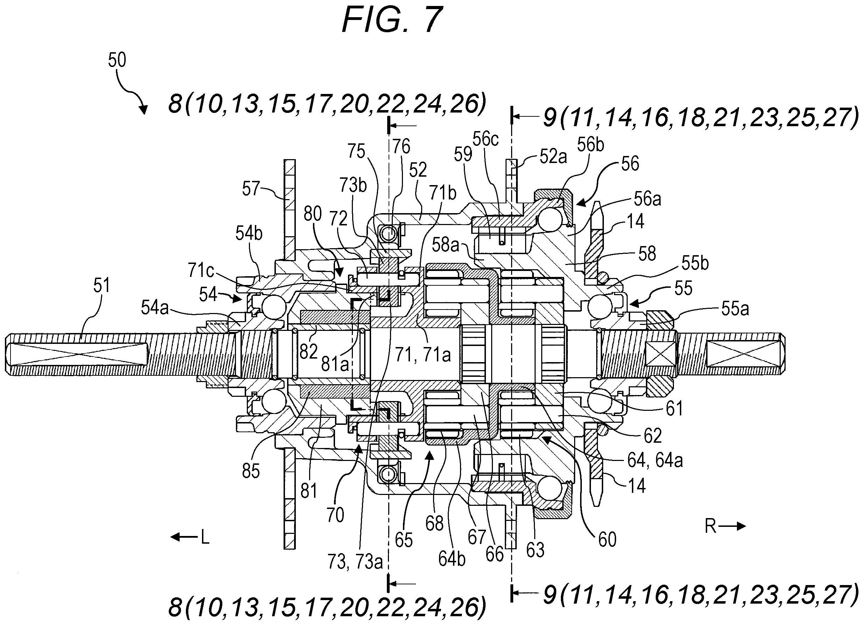

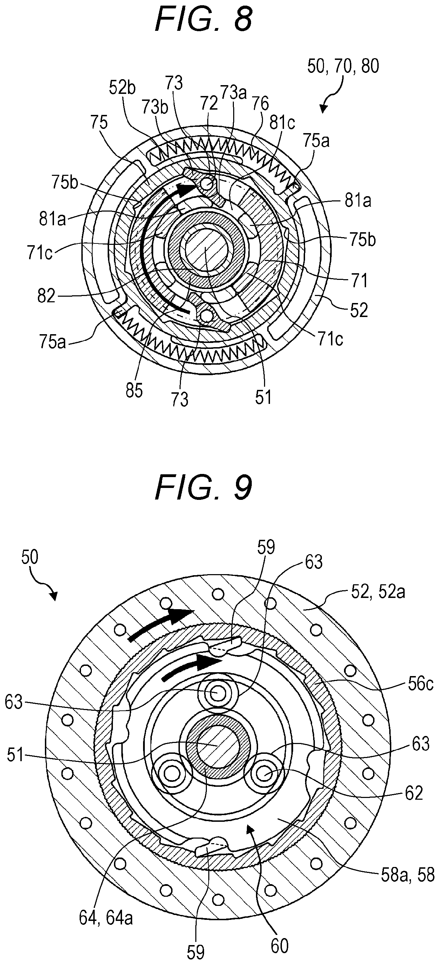

FIG. 7 is a vertical cross-sectional view of hub device (rear hub device) 50 of electric bicycle 1 (view of front division of hub device 50 divided into front and rear divisions as viewed from rear) according to a first exemplary embodiment of the present invention. FIG. 8 is a cross-sectional view (right side cross-sectional view) taken along a line 8-8 in FIG. 7 as viewed in a direction of arrows, while FIG. 9 is a cross-sectional view (right side cross-sectional view) taken along a line 9-9 in FIG. 7 as viewed in a direction of arrows.

As illustrated in FIGS. 7 through 9, hub shaft 51 is extended between rear ends of right and left chain stays 2e, and fixed in a horizontal posture . Hub body 52 is rotatably provided on hub shaft 51 via first through third bearings (ball bearings in this exemplary embodiment) 54, 55, 56. A left portion of hub body 52 has a small diameter, while a right portion of hub body 52 has a large diameter. Spoke flange portion 52a and spoke flange body 57 are extended from an outer circumferential portion of hub body 52 to the outside. Center side ends of a plurality of spokes of rear wheel 4 are attached to extended spoke flange portion 52a and spoke flange body 57. Force transmission rotation body 58 functions as a force transmission rotation body to which rear sprocket 14 is attached such that rear sprocket 14 and force transmission rotation body 58 are rotatable as a one-piece body.

According to this exemplary embodiment, inner portion 54a of first bearing 54 is fixed to a left portion (arrow L side) of hub shaft 51, while a left cylindrical portion of hub body 52 is fitted and fixed to an outer circumference of outer portion 54b of first bearing 54 in a manner rotatable with hub body 52 as a one-piece body, as illustrated in FIG. 7. Inner portion 55a of second bearing 55 is fixed to a right side (arrow R side) of hub shaft 51, while outer portion 55b of second bearing 55 is formed integrally with force transmission rotation body 58. Force transmission rotation body 58 is also formed integrally with inner portion 56a of third bearing 56. Extension portion 56c extending in a cylindrical shape toward the left (arrow L side) is formed integrally with outer portion 56b of third bearing 56. A right cylindrical portion of hub body 52 is fitted and fixed to an outer circumferential portion of extension portion 56c of third bearing 56 in a manner rotatable with hub body 52 as a one-piece body.

Extension portion 58a extending in a cylindrical shape toward the left is also formed integrally with force transmission rotation body 58. Driving force transmission unidirectional clutches (more specifically, claws of driving force transmission unidirectional clutches) 59 are provided between extension portion 58a of force transmission rotation body 58 and extension portion 56c of third bearing 56. Driving force transmission unidirectional clutches 59 transmit driving force (resultant force of human driving force and auxiliary driving force) to hub body 52 via chain 15 and rear sprocket 14. When receiving passive rotational force from hub body 52, driving force transmission unidirectional clutches 59 idle. More specifically, base portions of driving force transmission unidirectional clutches 59 (more specifically, cams of driving force unidirectional clutches) are fitted to an outer circumference of extension portion 58a of force transmission rotation body 58 while urged in a rising direction. An engaging surface formed in an inner circumferential surface of extension portion 56c of third bearing 56 engages with tips (claws of outer circumferences) of the cams of driving force transmission unidirectional clutches 59 in a predetermined rotation direction. Accordingly, extension portion 58a of force transmission rotation body 58 also functions as inner portions of driving force transmission unidirectional clutches 59, while extension portion 56c of third bearing 56 also functions as outer portions of driving force transmission unidirectional clutches 59. A teeth portion is further formed in an inner circumferential surface of extension portion 58a of force transmission rotation body 58. Accordingly, extension portion 58a of force transmission rotation body 58 also functions as an inner gear of first planetary gear mechanism 60.

According to the present exemplary embodiment, hub body 52 houses: first planetary gear mechanism 60 and second planetary gear mechanism 65 connected to each other in series; passive rotational force transmission clutch mechanism 70 capable of transmitting passive rotational force, which is transmitted from rear wheel 4 to hub body 52, to first planetary gear mechanism 60 and second planetary gear mechanism 65; and backward rotation permission mechanism 80 which permits rotation of hub body 52 in a backward direction of rear wheel 4.

First planetary gear mechanism 60 includes carrier 61 fixed to hub shaft 51 in a right part with respect to a central portion of hub shaft 51 in an unrotatable state by spline coupling (or serration coupling), carrier shafts 62 supported by carrier 61, and planetary gears 63 supported by carrier shafts 62 in a rotatable manner (rotatable on axes of planetary gears 63). Small-diameter portion 64a constituting variant cylindrical body 64 is rotatably provided on hub shaft 51 on a left side of a coupled portion between hub shaft 51 and carrier 61. A teeth portion formed in an outer circumferential surface of small-diameter portion 64a engages with planetary gears 63 on an inner circumferential side. First planetary gear mechanism 60 includes variant cylindrical body 64 which has small-diameter portion 64a functioning as a sun gear, and extension portion 58a of force transmission rotation body 58. Extension portion 58a can engage with planetary gears 63 on an outer circumferential side, and functions as an inner gear of first planetary gear mechanism 60.

During transmission of driving force (resultant force of human driving force and auxiliary driving force) from force transmission rotation body 58, first planetary gear mechanism 60 increases a rotational speed of rotational driving force transmitted to force transmission rotation body 58 to an approximately twice higher rotation speed in a reverse direction, for example, and transmits the force to small-diameter portion 64a of variant cylindrical body 64. On the other hand, passive rotational force is transmitted to small-diameter portion 64a of variant cylindrical body 64. During transmission of passive rotational force to small-diameter portion 64a of variant cylindrical body 64, first planetary gear mechanism 60 reduces a speed of the passive rotational force (e.g., to approximately half rotation speed) in the reverse direction, and transmits the force to force transmission rotation body 58.

Second planetary gear mechanism 65 includes carrier 66 fixed to the central portion of hub shaft 51 in an unrotatable state by spline coupling (or serration coupling), carrier shafts 67 supported by carrier 66, and planetary gears 68 supported by carrier shafts 67 in a rotatable manner (rotatable on axes of planetary gears 68). Small-diameter portion 71a is rotatably provided on hub shaft 51 on a left side of a coupled portion between hub shaft 51 and carrier 66. A teeth portion formed in an outer circumferential surface of small-diameter portion 71a engages with planetary gears 68 on an inner circumferential side. Second planetary gear mechanism 65 includes passive rotation body 71 which has small-diameter portion 71a functioning as a sun gear, and large-diameter portion 64b of variant cylindrical body 64. Large-diameter portion 64b can engage with planetary gears 68 on an outer circumferential side, and functions as an inner gear of second planetary gear mechanism 65.

During transmission of driving force (resultant force of human driving force and auxiliary driving force) to variant cylindrical body 64 via first planetary gear mechanism 60, second planetary gear mechanism 65 increases a speed of rotational driving force transmitted to variant cylindrical body 64 (e.g., to approximately twice higher rotation speed) in the reverse direction, and transmits the force to small-diameter portion 71a of passive rotation body 71. On the other hand, passive rotational force is transmitted to small-diameter portion 71a of passive rotation body 71. During transmission of passive rotational force to small-diameter portion 71a of passive rotation body 71, second planetary gear mechanism 65 reduces a speed of the passive rotational force (e.g., to approximately half rotation speed), and transmits the force to variant cylindrical body 64.

As illustrated in FIGS. 7 and 8, passive rotational force transmission clutch mechanism 70 includes passive rotation body 71 which has small-diameter portion 71a rotatably engaging with a substantially central portion of an outer surface of hub shaft 51, and supports a plurality of (two) revolution shafts 72 revolvable coaxially with hub shaft 51 via arm portions 71b extending to the outside. Passive rotational force transmission clutch mechanism 70 further includes cam bodies 73 each of which is supported in a manner rotatable around revolution shaft 72, and has inner diameter side projection 73a projectable to an inner diameter side and outer diameter side projection 73b projectable to an outer diameter side. Passive rotational force transmission clutch mechanism 70 further includes a first spring member (not shown) which urges cam bodies 73 such that inner diameter side projections 73a of cam bodies 73 project toward the inner diameter side and that outer diameter side projections 73b of cam bodies 73 project toward the outer diameter side. Passive rotational force transmission clutch mechanism 70 further includes cylindrical rotation body 75 having a substantially cylindrical shape, and slidably provided inside circular-arc portion 52b formed integrally with an inner circumference of hub body 52 in a circular-arc shape. Projections 75a are formed at a plurality of positions (two positions) of cylindrical rotation body 75 in a circumferential direction. Passive rotational force transmission clutch mechanism 70 further includes second spring members 76 housed inside the outer circumferential surface of hub body 52 to urge cylindrical rotation body 75 to rotate clockwise with respect to hub body 52 in a side view as illustrated in FIG. 8. As illustrated in FIG. 8, a plurality of locking recesses 75b formed in an inner circumferential surface of cylindrical rotation body 75 are brought into an engaged state when cam bodies 73 and passive rotation body 71 relatively rotate anticlockwise with respect to cylindrical rotation body 75 Inner diameter side projections 73a of cam bodies 73 are allowed to come into space 81c formed between right extension portions 81a of backward rotation body 81 described below. Moreover, as described below, right extension portions 81a of backward rotation body 81 are allowed to contact projections 71c, extending from arm portions 71b of passive rotation body 71 toward a left inner diameter side, in the circumferential direction.

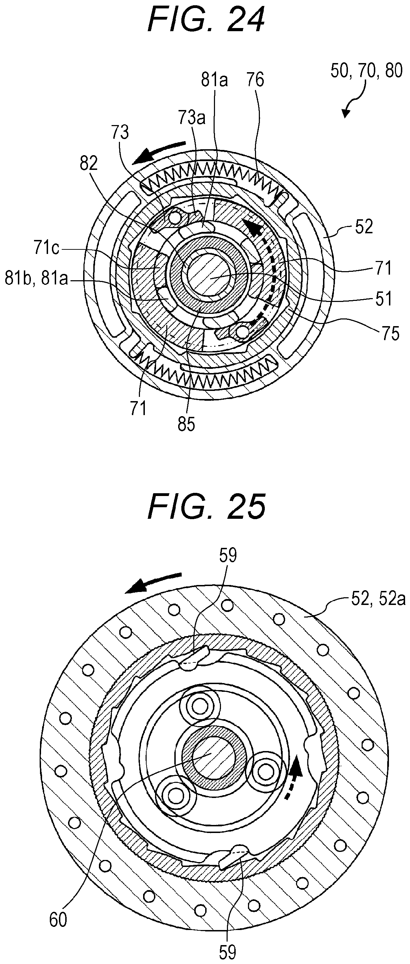

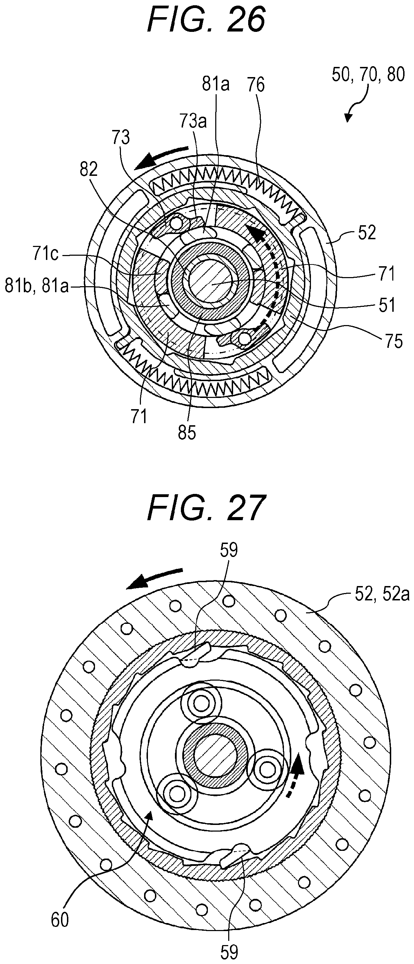

As illustrated in FIG. 7, backward rotation permission mechanism 80 which permits rotation of hub body 52 in the backward direction of rear wheel 4 includes torque limiter 82 engaging with a left part of hub shaft 51 with predetermined torque, and backward rotation body 81 provided on an outer circumference side of torque limiter 82. Backward rotation permission mechanism 80 further includes backward unidirectional clutch 85 disposed between backward rotation body 81 and torque limiter 82, and connected when backward rotation body 81 rotates anticlockwise with respect to torque limiter 82 in a side view as illustrated in FIGS. 24 and 26. A plurality of right extension portions 81a extending to the right are provided on backward rotation body 81. As illustrated in FIG. 8, inner diameter side projections 73a of cam bodies 73 are allowed to come into space 81c formed between right extension portions 81a. In addition, right extension portions 81a are allowed to contact projections 71c, extending from arm portions 71b of passive rotation body 71 toward the left inner diameter side, in the circumferential direction (see FIG. 24). Torque limiter 82 has a structure where oil is sealed between a pair of O rings fitted to hub shaft 51. However, it is not limited thereto as long as torque limiter 82 maintains a state not rotatable with hub shaft 51 under torque of a predetermined value or smaller regardless of the rotation direction but allows rotation with respect to hub shaft 51 under torque exceeding the predetermined value.

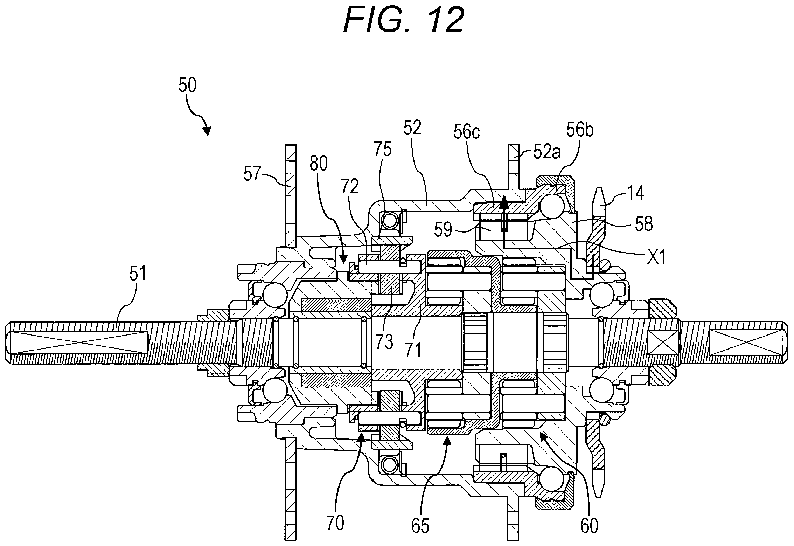

During traveling of electric bicycle 1 by working pedals 8, driving force generated as resultant force of human driving force and auxiliary driving force (or only human driving force output from driving unit 20 without generation of auxiliary driving force at relatively high speed of electric bicycle 1) is transmitted to rear sprocket 14 via chain 15. In this case, the driving force is transmitted to force transmission rotation body 58 coupled with rear sprocket 14, and further transmitted to hub body 52 via driving force transmission unidirectional clutches 59 as illustrated in FIG. 9, 11 and 12. As a result, hub body 52 is allowed to rotate at the same rotation speed via rear sprocket 14 and force transmission rotation body 58. The driving force is thus transmitted to rear wheel 4 to allow traveling of electric bicycle 1. FIG. 12 illustrates driving force transmission path X1 through which driving force input to rear sprocket 14 is transmitted to hub body 52.

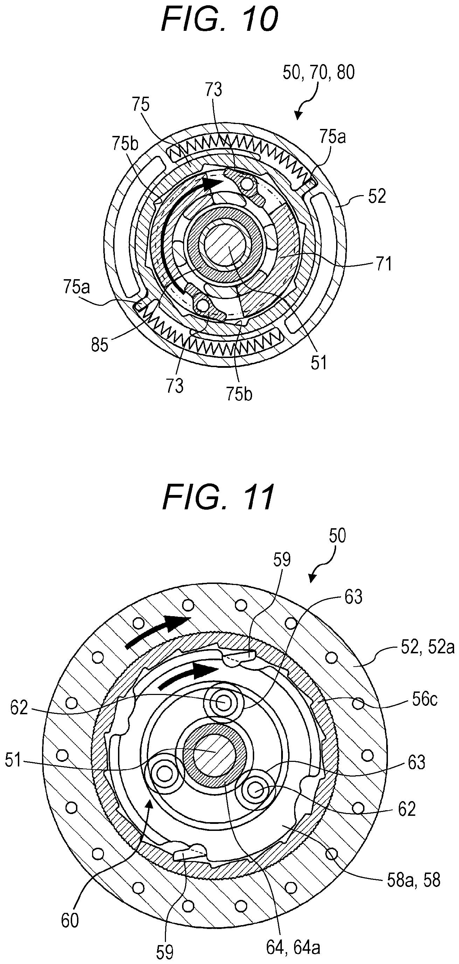

As illustrated in FIG. 7, since extension portion 58a of force transmission rotation body 58 also engages with planetary gears 63 of first planetary gear mechanism 60, this driving force is also transmitted to first planetary gear mechanism 60 and second planetary gear mechanism 65, when driving force is transmitted to force transmission rotation body 58. As a result, passive rotation body 71 of passive rotational force transmission clutch mechanism 70 also rotates. However, passive rotation body 71 rotates at a high speed (approximately four times higher rotation speed than rotation speed of force transmission rotation body 58 in this exemplary embodiment) as illustrated in FIGS. 8 and 10, and thus condition cam bodies 73 come into a lying posture, so that passive rotation body 71 only idles with respect to hub body 52. In other words, the driving force (resultant force of human driving force and auxiliary driving force) is not transmitted toward hub body 52 via passive rotational force transmission clutch mechanism 70 in this state.

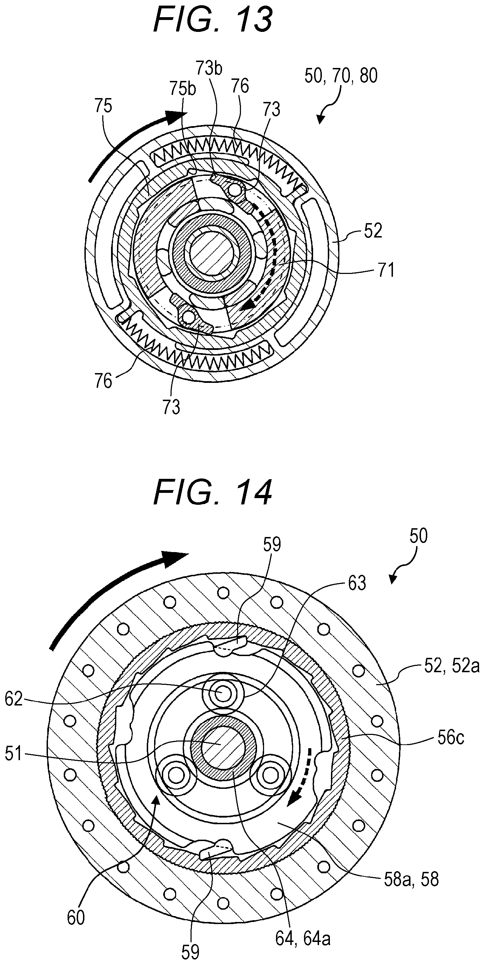

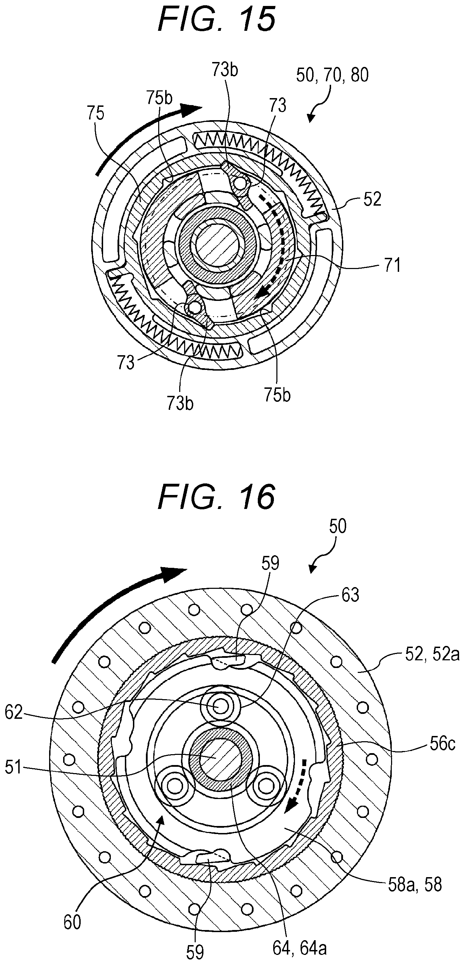

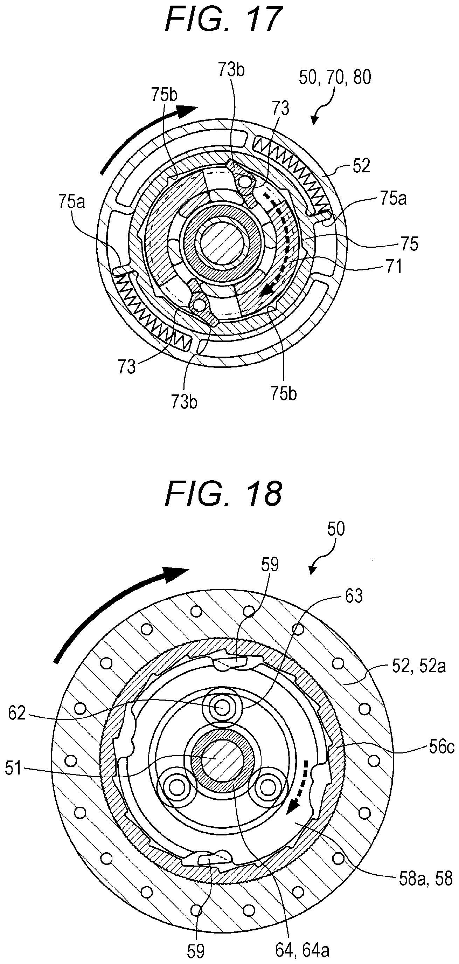

On the other hand, when driving force is not transmitted to hub device 50 without working pedals 8 during coasting on a downslope or the like, passive rotational force of rear wheel 4 toward the contact surface is transmitted to hub body 52 rotating with rear wheel 4 as a one-piece body via spokes. When hub body 52 rotates with rear wheel 4, passive rotational force of hub body 52 is transmitted to cylindrical rotation body 75 via second spring members 76 to rotate hub body 52 and cylindrical rotation body 75 substantially at the same rotation speed as illustrated in FIGS. 13 and 15. Thereafter, as illustrated in FIGS. 15 and 17, outer diameter side projections 73b of cam bodies 73 engage with engaging recesses 75b of cylindrical rotation body 75 in passive rotational force transmission clutch mechanism 70 to also rotate passive rotation body 71 substantially at the same rotation speed as the rotation speed of cylindrical rotation body 75.

When passive rotation body 71 is rotated by the passive rotational force, the speed of the passive rotational force is initially reduced by second planetary gear mechanism 65 in the reverse direction (e.g., reduced to approximately half of rotation speed), and transmitted to variant cylindrical body 64 (see FIG. 19). Subsequently, the speed of the passive rotational force is further reduced by first planetary gear mechanism 60 in the reverse direction (i.e., in the same direction as the original rotation direction of hub body 52), and transmitted in this state. More specifically, the speed of the passive rotational force is reduced to approximately one fourth of the rotation speed of hub body 52, for example, and transmitted to force transmission rotation body 58 (see FIGS. 14, 16, and 18). In this case, hub body 52 is rotated at a higher rotation speed than the rotation speed of force transmission rotation body 58 (i.e., at a high speed), and therefore the cams of driving force transmission unidirectional clutches 59 idle in a lying posture. Accordingly, in a state of no transmission of driving force to hub device 50 without working pedals 8 on a downslope or the like, passive rotational force of rear wheel 4 toward the contact surface is transmitted in a manner illustrated in FIG. 19. More specifically, the passive rotational force at a speed reduced to a lower speed than the rotation speed of hub body 52 is transmitted to rear sprocket 14 constituting a rotation wheel body via passive rotational force speed reduction transmission path X2 which sequentially passes through hub body 52, passive rotational force transmission clutch mechanism 70, second planetary gear mechanism 65, first planetary gear mechanism 60, and force transmission rotation body 58.

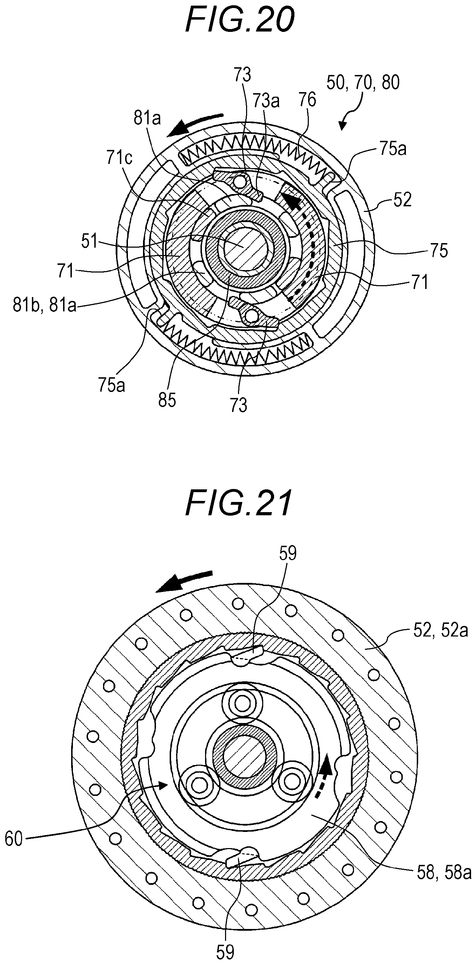

During backward movement of electric bicycle 1, hub body 52 rotates anticlockwise in a right side view as illustrated in FIGS. 20, 21 and other figures. In this case, the cams of driving force transmission unidirectional clutches 59 come into a rising posture, whereby force transmission rotation body 58 also rotates anticlockwise in a side view as illustrated in FIGS. 21, 23, 25, and 27. In accordance with the rotation of force transmission rotation body 58, cam bodies 73 of passive rotational force transmission clutch mechanism 70 are urged to rotate at a high speed (e.g., four times higher rotation speed) in the same direction as the directions of hub body 52, force transmission rotation body 58 and the like (anticlockwise) via first planetary gear mechanism 60 and second planetary gear mechanism 65. When cam bodies 73 of passive rotational force transmission clutch mechanism 70 come into a rising state at this time, cam bodies 73 engage with the inner circumferential surface of cylindrical rotation body 75 rotating at a different speed (low speed). In this case, electric bicycle 1 comes into a locked state and cannot move backward.

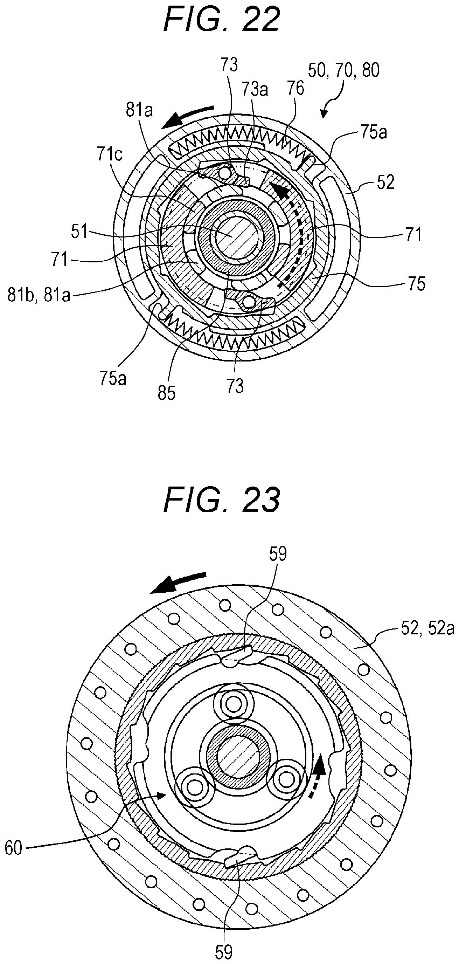

For canceling this locked state, backward rotation permission mechanism 80 is provided to permit rotation of hub body 52 in the backward direction of rear wheel 4. During backward movement of electric bicycle 1, second spring members 76 are contracted by cylindrical rotation body 75 pressed by cam bodies 73 as illustrated in FIG. 22, and cam bodies 73 come into a state rotatable to the lying state from the state engaging with the inner circumferential surface of cylindrical rotation body 75. In this condition, torque limiter 82 receiving only small torque remains fixed to hub shaft 51. Similarly, backward rotation body 81 to which backward unidirectional clutch 85 is connected remains fixed during backward movement.

When electric bicycle 1 further moves backward in this condition, passive rotation body 71 rotates at a speed higher than the rotation speed of hub body 52 as illustrated in FIG. 24. As a result, inner diameter side projections 73a of cam bodies 73 ride on right extension portions 81a of backward rotation body 81, whereby cam bodies 73 come into a posture not engaging with cylindrical rotation body 75 (lying posture). Simultaneously, projections 71c of passive rotation body 71 contact right extension portions 81b of backward rotation body 81, whereby the lying state of cam bodies 73 are maintained as illustrated in FIG. 26. When torque applied to torque limiter 82 exceeds a fixed value by further addition of backward movement force of electric bicycle 1 in this condition, passive rotation body 71 and backward rotation body 81 rotate anticlockwise under the lying posture of cam bodies 73, while relative positions of passive rotation body 71 and backward rotation body 81 are maintained during the anticlockwise rotation. As a result, locking by cam bodies 73 is canceled, and a state permitting backward movement of electric bicycle 1 is maintained.

According to the configuration described above, passive rotational force transmitted from rear wheel 4 to hub body 52 of hub device (rear hub device) 50 is transmitted to rear sprocket 14 constituting a rotation wheel body, at a rotation speed of the passive rotational force is reduced to a speed lower than the rotation speed of hub body 52, via passive rotational force speed reduction transmission path X2 (see FIG. 19) which passes through first planetary gear mechanism 60 and second planetary gear mechanism 65. According to this configuration, motor 21 is not rotated at a rotation speed considerably higher than a no-load maximum rotation speed (maximum rotation speed of motor 21 in no-load state) even during high-speed traveling of electric bicycle 1, such as coasting on a downslope, which avoids adverse effects on battery 12. Preferable battery charging is therefore achievable even during high-speed traveling. Moreover, preferable braking accompanied with regenerative operation is achievable during high-speed traveling. Furthermore, a manufacturing cost and a heat generation amount can be reduced by elimination of a necessity of a cut-off device such as FET for cutting off charging current during high-speed traveling.

According to the configuration described above, first planetary gear mechanism 60 and second planetary gear mechanism 65 are provided, and passive rotational force is input from small-diameter portion 71a of passive rotation body 71 and small-diameter portion 64a of variant cylindrical body 64 both functioning as sun gears, and output from large-diameter portion 64b of variant cylindrical body 64 and extension portion 58a of force transmission rotation body 58 both functioning as inner gears after speed reduction, in a fixed state of carriers 61, 66. Accordingly, the rotation speed of passive rotational force applied to hub body 52 can be excellently reduced to a desired low speed and transmitted to rear sprocket 14.

According to the configuration described above, hub device 50 includes backward rotation permission mechanism 80 which permits rotation of hub body 52 in the backward direction of rear wheel 4. Therefore, at the time of movement in the backward direction of electric bicycle 1, electric bicycle 1 is prevented from coming into a locked state and being not allowed to move backward, and thus is capable of moving backward without causing problems.

According to the configuration described above, rear sprocket 14 constituting a rotation wheel body functions as a driving force input body for inputting driving force (human driving force and auxiliary driving force) to hub device 50, and also as a passive rotational force output body for outputting passive rotational force, which is applied to the wheel (rear wheel 4), to the driving unit. Accordingly, both driving force and passive rotational force are input and output in a preferable manner between hub device 50 and driving unit 20 provided with motor 21, via single chain 15.

According to the configuration described above, rear sprocket 14 constituting a rotation wheel body is coupled with hub body 52 such that rear sprocket 14 and hub body 52 are rotatable as a one-piece body during input of driving force. In this case, rear wheel 4 can rotate at the same rotation speed as the rotation speed of rear sprocket 14 during traveling of electric bicycle 1 by human driving force and auxiliary driving force. Accordingly, a necessity of considerable improvement of durability of hub device 50 is eliminated even under application of resultant force of human driving force and auxiliary driving force to rear sprocket 14 during application of auxiliary driving force. The manufacturing cost therefore does not rise.

Moreover, since passive rotational force has relatively small torque, no problem arises even when passive rotation transmission parts, such as gears of first planetary gear mechanism 60 and second planetary gear mechanism 65 constituting passive rotational force speed reduction transmission path X2, are made of inexpensive material such as resin. Accordingly, a rise of the manufacturing cost decreases to a minimum.

The configuration described above includes driving force transmission path X1 which transmits driving force received by rear sprocket 14 constituting a rotation wheel body to hub body 52 at a rotation speed ratio (1 in this exemplary embodiment) which is different from a speed increase ratio (e.g., 4) corresponding to a reciprocal number of a speed reduction ratio (e.g., 1/4) at which passive rotational force is transmitted. According to this configuration, preferable traveling is achievable by rotating the wheel (rear wheel 4) at a rotation speed ratio different from the speed increase ratio corresponding to the reciprocal number of the speed reduction ratio at which passive rotational force is transmitted during traveling of electric bicycle 1 by human driving force and auxiliary driving force.

According to the configuration described above, rear sprocket 14 constituting a rotation wheel body is coupled with hub body 52 such that rear sprocket 14 and hub body 52 are rotatable as a one-piece body during input of driving force. However, instead of the configuration described herein, driving force may be transmitted to hub body 52 with speed increase or speed reduction by using a speed reduction gear or a speed increase gear added to the driving force transmission path through which driving force is transmitted to hub body 52.

According to the present exemplary embodiment, passive rotational force is input from small-diameter portion 71a of passive rotation body 71 and small-diameter portion 64a of variant cylindrical body 64 both functioning as sun gears, and output from large-diameter portion 64b of variant cylindrical body 64 and extension portion 58a of force transmission rotation body 58 both functioning as inner gears after speed reduction, in the fixed state of carriers 61, 66. However, instead of the configuration described herein, respective sun gears 69A, 69B may be coupled and fixed to hub shaft 51 as illustrated in FIG. 28. In addition, inner gear portion 71d of second planetary gear mechanism 65A may be formed integrally with passive rotation body 71 which supports revolution shafts 72 and cam bodies 73, while carrier 66A of second planetary gear mechanism 65A may be formed integrally with inner gear portion 64A of first planetary gear mechanism 60A. In this configuration, a force transmission rotation body 58A may function as a carrier of first planetary gear mechanism 60A. In this case, passive rotational force is input from inner gear portion 71d and inner gear portion 64A, and output from carrier 66A of second planetary gear mechanism 65A and force transmission rotation body 58A after speed reduction of the passive rotational force. This passive rotational force path constitutes passive rotational force speed reduction transmission path X2a.

According to this configuration, passive rotational force received by hub body 52 is similarly transmitted by hub device (rear hub device) 50A toward rear sprocket 14 constituting a rotation wheel body after speed reduction by second planetary gear mechanism 65A and first planetary gear mechanism 60A, even at a speed reduction ratio reducing a smaller reduction amount (approximately 1/2) than the speed reduction amount achieved by the exemplary embodiment described above. Accordingly, preferable charging of battery 12 is achievable even during high-speed traveling of electric bicycle 1, such as coasting on a downslope or the like. In addition, a manufacturing cost and a heat generation amount can decrease by elimination of a necessity of a cut-off device such as FET for cutting off charging current during high-speed traveling.

According to the exemplary embodiments described above, first planetary gear mechanism 60, 60A and second planetary gear mechanism 65, 65A are connected in series for speed reduction. However, only one planetary gear mechanism, or three or more planetary gear mechanisms may be provided for speed reduction. Alternatively, speed reduction gears engaging with each other may be used for speed reduction instead of the planetary gear mechanisms.

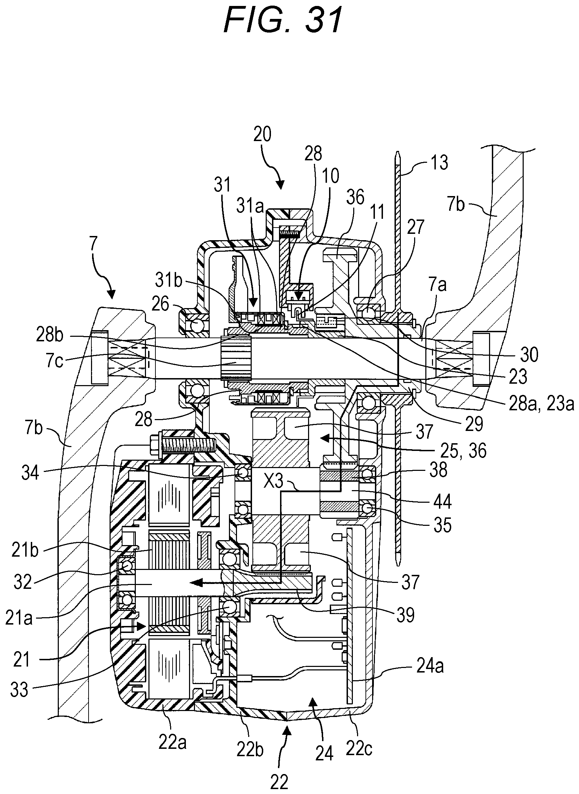

Driving unit 20 including motor 21 may have any structures as long as passive rotational force transmitted to chain 15 is further transmitted to motor 21. Driving unit 20 illustrated in FIGS. 4 and 5 includes speed reduction mechanism 25 capable of transmitting passive rotational force to motor 21 after the passive rotational force is transmitted to chain 15. Front sprocket 13 constituting a resultant force output wheel body for outputting resultant force of human driving force and auxiliary driving force is attached to driving unit 20 to constitute passive rotational force motor transmission path X3 (see FIG. 31) through which passive rotational force is transmitted from the resultant output wheel body to motor 21.

Driving unit 20 with this configuration is hereinafter described.

As illustrated in FIGS. 3 through 5, driving unit 20 includes an outer casing constituted by unit case 22 which includes motor case 22a, left case 22b, and right case 22c. Crank shaft 7a penetrates a front part of driving unit 20 in the right-left direction. Substantially cylindrical human force transmitter 28 to which human driving force is transmitted from crank shaft 7a, and linkage cylindrical body 23 to which human driving force is transmitted from human force transmitter 28 are provided on an outer circumference of crank shaft 7a. Human driving force is transmitted from linkage cylindrical body 23 via unidirectional clutch (auxiliary driving force cut-off unidirectional clutch) 30. Further provided is resultant force transmitter 29 for transmitting to front sprocket 13 resultant force of human driving force and auxiliary driving force from motor 21.

Speed reduction mechanism 25 which includes a plurality of pairs of reduction gears (speed reduction gear 36, first intermediate shaft speed reduction gear 37, second intermediate shaft speed reduction gear 38, and motor shaft speed reduction gear 39) is disposed in a range of unit case 22 from a front right part to a central portion in the front-rear direction, for example. Furthermore, motor 21 is disposed in a rear left part of unit case 22, while controller 24 is provided in a rear right part of unit case 22. Controller 24 includes control board 24a containing electronic parts for performing various types of electric controls, a storage unit for storing various types of information, and others.

Driving unit 20 is further detailed. As illustrated in FIGS. 4 and 5, crank shaft 7a penetrating the front part of driving unit 20 in the right-left direction is rotatably supported by bearings 26, 27. Cylindrical human force transmitter 28 is fitted to an outer circumference of a left portion of the crank shaft 7a via serration portion (or spline portion) 7c such that human force transmitter 28 and crank shaft 7a rotate as a one-piece body. Serration portion (or spline portion) 28b is similarly provided on an inner circumference of human force transmitter 28 at a position corresponding to serration portion (or spline portion) 7c of crank shaft 7a to engage with serration portion (or spline portion) 7c of crank shaft 7a.

Magneto-striction generator 31b having magnetic anisotropy is provided on an outer circumferential surface of human force transmitter 28. Coil 31a is disposed on an outer circumference of magneto-striction generator 31b with a fixed clearance (space). Magneto-striction generation unit 31b and coil 31a thus provided constitute magneto-striction type torque sensor (human force detector) 31. According to this configuration, human driving force is transmitted from crank shaft 7a to human force transmitter 28, and detected by torque sensor 31. Magneto-striction generator 31b of magneto-striction type torque sensor 31 has a spiral shape which forms angles of +45 degrees and -45 degrees with respect to a shaft center direction of human force transmitter 28, for example. When human driving force is transmitted to human force transmitter 28, magneto-striction generator 31b on the surface of human force transmitter 28 is distorted and produces magnetic permeability increasing portion and magnetic permeability decreasing portion. Inductance difference of coil 31a thus produced is measured to detect a magnitude of torque (human driving force).

Linkage cylindrical body 23 is disposed on the outer circumference of crank shaft 7a at a position adjacent to the right side of human force transmitter 28 in a manner rotatable relative to crank shaft 7a. However, linkage cylindrical body 23 engages with serration portion (or spline portion) 28a formed at a right end of the outer circumference of human force transmitter 28, and serration portion (or spline portion) 23a formed at a left end of the inner circumference of linkage cylindrical body 23 to rotate with human transmitter 28 as a one-piece body. According to the present exemplary embodiment, serration portion (or spline portion) 23a formed at the left end of the inner circumference of linkage cylindrical body 23 engages with an outer face of serration portion (or spline portion) 28a of human force transmitter 28.

Further, according to the present exemplary embodiment, rotation detection member 11 is attached to an outer circumference of a left portion of linkage cylindrical body 23 to detect a rotation state of linkage cylindrical body 23. Rotation detector 10 is also attached and fixed to unit case 22 such that rotation detection member 11 is inserted into rotation detector 10 with small clearances in the right-left direction. For example, rotation detector 10 includes two optical sensors constituted by a pair of light emission unit and light reception unit and arranged in a rotation direction of rotation detection member 11, while rotation detection member 11 includes many teeth (light shielding portions) extending in an outer circumferential direction in a comb shape. The teeth of rotation detection member 11 pass between the light emission unit and the light reception unit of rotation detector 10 to allow electrical detection of a light receiving state and a light shielding state by rotation detector 10. Controller 24 receives a signal indicating this detection, and detects a rotation amount and a rotation direction of linkage cylindrical body 23. The rotation amount and the rotation direction of linkage cylindrical body 23 may be detected by a magnetic sensor provided instead of the optical sensor. Linkage cylindrical body 23 rotates with human force transmitter 28 as a one-piece body, while human force transmitter 28 rotates with crank shaft 7a as a one-piece body. Accordingly, the rotation amount and the rotation direction of each of crank shaft 7a and pedals 8 can be detected by detection of the rotation amount and the rotation direction of linkage cylindrical body 23.

Resultant force transmitter 29 is further provided on an outer circumference of a right portion of linkage cylindrical body 23 via unidirectional clutch (auxiliary driving force cut-off unidirectional clutch) 30. During forward movement by working pedals 8, human driving force transmitted to linkage cylindrical body 23 is transmitted to resultant force transmitter 29 via unidirectional clutch 30.

As illustrated in FIG. 4, rotation shaft 21a and rotor unit 21b of motor 21 are rotatably supported by motor bearings 32, 33. Rotation shaft 21a of motor 21 projects toward the right. Motor shaft speed reduction gear 39 described below is provided on an outer circumference of this projecting portion.

As illustrated in FIGS. 4 and 5, speed reduction mechanism 25 includes intermediate shaft 44 disposed in parallel with crank shaft 7a, and the plurality of pairs (two pairs in this exemplary embodiment) of speed reduction gears (speed reduction gear 36, first intermediate shaft speed reduction gear 37, second intermediate shaft speed reduction gear 38, and motor shaft speed reduction gear 39) including large-diameter speed reduction gear 36 provided on a left part of resultant force transmitter 29. Speed reduction mechanism 25 synthesizes human driving force transmitted via crank shaft 7a, and auxiliary driving force transmitted from motor 21, and transmits resultant force of synthesized human driving force and auxiliary driving force to resultant force transmitter 29.

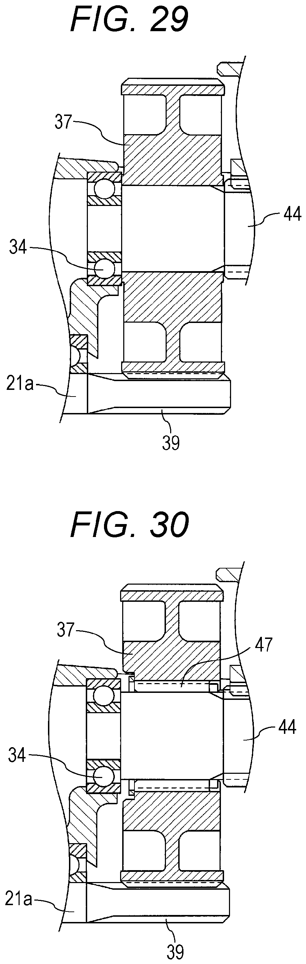

Intermediate shaft 44 provided in a central portion of driving unit 20 in the front-rear direction extends in the right-left direction in a posture parallel with crank shaft 7a and in a state rotatably supported by bearings 34, 35. Large-diameter first intermediate shaft speed reduction gear 37, and small-diameter second intermediate shaft speed reduction gear 38 are attached to intermediate shaft 44. Particularly according to the present exemplary embodiment, large-diameter first intermediate shaft speed reduction gear 37 is press-fitted into intermediate shaft 44 in the shaft center direction as illustrated in FIG. 29, or large-diameter first intermediate shaft speed reduction gear 37 is coupled with intermediate shaft 44 via serration portion 47 slightly inclined to the shaft center direction as illustrated in FIG. 30. Accordingly, this configuration allows auxiliary driving force received from motor 21 to be output from front sprocket 13 in a preferable manner via intermediate shaft 44 and resultant force transmitter 29. In addition, rear wheel side passive rotational force transmitted from chain 15 and front sprocket 13 is transmitted to motor 21 in a preferable manner via resultant force transmitter 29 and intermediate shaft 44. Each of first intermediate shaft speed reduction gear 37 and second intermediate shaft speed reduction gear 38 always rotates with intermediate shaft 44 as a one-piece body.

Motor shaft speed reduction gear 39 provided on rotation shaft 21a of motor 21 has a small diameter, and engages with large-diameter first intermediate shaft speed reduction gear 37. When auxiliary driving force is output by rotation of motor 21 having this configuration, a rotation speed of motor 21 is reduced to amplify torque of the auxiliary driving force generated from motor 21. The auxiliary driving force with amplified torque is thus transmitted toward intermediate shaft 44. Small-diameter second intermediate shaft speed reduction gear 38 engages with large-diameter speed reduction gear 36 formed integrally with resultant force transmitter 29. This configuration further amplifies torque of auxiliary driving force transmitted to intermediate shaft 44, and transmits the auxiliary driving force with amplified torque to speed reduction gear 36. Thereafter, human driving force and auxiliary driving force from motor 21 are synthesized by resultant force transmitter 29, and output from front sprocket 13.

On the other hand, during traveling such as coasting without working pedals 8, i.e., without human driving force (pedal force), passive rotational force applied to rear wheel 4 is transmitted to front sprocket 13 via hub device 50, rear sprocket 14, and chain 15 according to the configuration described above. Thereafter, the passive rotational force transmitted to front sprocket 13 is transmitted from resultant force transmitter 29 to motor 21 via speed reduction gear 36 (passive rotational force motor transmission path X3) as illustrated in FIG. 31. Regenerative operation is thus performed by motor 21 rotated by the passive rotational force, so that preferable charging of battery 12 is achievable.

According to the exemplary embodiments described above, driving unit 20 is constituted by uniaxial driving unit which synthesizes auxiliary driving force and human driving force, and outputs the synthesized force from front sprocket 13 constituting a rotation wheel body. However, instead of such a configuration, as illustrated in FIG. 32 (the respective configuration shown in figures 32 is helpful for understanding the present invention), auxiliary driving force received from motor 21A may be output via speed reduction mechanism 25A from motor sprocket 19 engaging with a chain (not shown), while only human driving force may be output from front sprocket 13A constituting a driving force output wheel body. This configuration is applicable to biaxial driving unit 20A which synthesizes human driving force and auxiliary driving force from motor 21A by using chain 15A.

More specifically, in this case, passive rotational force applied to rear wheel 4 is transmitted to front sprocket 13 and motor sprocket 19 via hub device 50, rear sprocket 14, and chain 15 during traveling such as coasting without working pedals 8, i.e., without human driving force (pedal force). Thereafter, the passive rotational force transmitted to motor sprocket 19 is transmitted to motor 21 via speed reduction mechanism 25A. The transmission path for this sequential rotation force constitutes passive rotational force motor transmission path X4. Regenerative operation is thus performed by motor 21A rotated by the passive rotational force, so that preferable charging of battery 12 is achievable.

According to the exemplary embodiment described above, chain 15 is provided as an endless force transmitter which transmits pedal force (human driving force) received from pedals 8 toward rear wheel 4. However, a toothed belt may be adopted instead of a chain. Similarly, when a toothed belt (driving force transmission toothed belt) is used, a front gear, a rear gear, and a motor output gear may be provided instead of front sprocket 13, rear sprocket 14 constituting a rotation wheel body, and the motor sprocket constituting an auxiliary driving force output wheel body for outputting auxiliary driving force, respectively.

As described above, an electric bicycle according to the present invention includes a plurality of wheels, a frame, and a driving unit that includes a motor. The electric bicycle is configured to travel with a combination of human driving force generated by pedal force applied from pedals and auxiliary driving force generated by the motor, and to transmit passive rotational force, which is applied to the plurality of wheels from a contact surface, to the motor for regeneration. One wheel of the plurality of wheels is provided with a hub device including a hub shaft attachable to the frame, and a hub body rotatable around the hub shaft, and rotatable with the one wheel as a one-piece body. The hub device further includes a rotation wheel body that functions as a passive rotational force output body for outputting the passive rotational force to the driving unit, and a passive rotational force speed reduction transmission path at which a speed of the passive rotational force transmitted to the hub body is reduced to a speed lower than a rotation speed of the hub body and the passive rotational force having the reduced speed is transmitted to the rotation wheel body.

With this configuration, the speed of the passive rotational force transmitted from the one wheel to the hub body is reduced to a speed lower than the rotation speed of the hub body while the passive rotational force passes through the passive rotational force speed reduction transmission path. Thereafter, the passive rotational force having the reduced speed is output from the rotation wheel body of the hub device. In this case, the motor is not rotated at a rotation speed considerably higher than a no-load maximum rotation speed, i.e., a maximum rotation speed of the motor in no-load state, even during high-speed traveling of the electric bicycle, such as coasting on a downslope. Accordingly, a possibility of imposition of adverse effects on a battery is eliminated, or reduced to a minimum even when regenerative operation is continued.

In the electric bicycle according to the present invention, the hub device may include a backward rotation permission mechanism that permits rotation of the hub body in a backward direction of the one wheel. According to this configuration, backward movement of the electric bicycle is achievable without problems.

According to the electric bicycle of the present invention, the rotation wheel body may also function as a driving force input body through which at least one driving force of the human driving force and the auxiliary driving force is input to the hub device. In this case, the rotation wheel body may be coupled with the hub body to be rotatable with the hub body as a one-piece body during input of one driving force. According to this configuration, the one wheel can rotate at the same rotation speed as the rotation speed of the rotation wheel body during traveling of the electric bicycle by human driving force and auxiliary driving force.

According to the electric bicycle of the present invention, the rotation wheel body may also function as a driving force input body through which at least one driving force of the human driving force and the auxiliary driving force is input to the hub device. In this case, the electric bicycle may include a driving force transmission path through which one driving force input to the rotation wheel body is transmitted to the hub body at a rotation speed ratio different from a speed increase ratio that corresponds to a reciprocal number of a speed reduction ratio at which the passive rotational force is transmitted. According to this configuration, the one wheel can be rotated at a rotation speed ratio different from the speed increase ratio corresponding to the reciprocal number of the speed reduction ratio at which passive rotational force is transmitted, during traveling of the electric bicycle by human driving force and auxiliary driving force.

According to the electric bicycle of the present invention, the driving unit may be disposed at an intermediate position between a front wheel and a rear wheel, and force may be transmitted between the driving unit and the rotation wheel body via an endless force transmitter. According to this configuration, passive rotational force can be transmitted to the driving unit via the endless force transmitter even in a state that the driving unit is disposed at the intermediate position between the front wheel and the rear wheel.

According to the electric bicycle of the present invention, the driving unit may be attached with a resultant force output wheel body that outputs resultant force of the human driving force and the auxiliary driving force. In this case, the electric bicycle may include a passive rotational force motor transmission path through which the passive rotational force is transmitted from the resultant force output wheel body to the motor. According to this configuration, passive rotational force input to the driving unit is transmitted to the motor in a preferable manner via the passive rotational force motor transmission path.

According to the electric bicycle of the present invention, the driving unit may be attached with an auxiliary driving force output wheel body that outputs the auxiliary driving force, In this case, the electric bicycle may include a passive rotational force motor transmission path through which the passive rotational force is transmitted from the auxiliary driving force output wheel body to the motor. According to this configuration, passive rotational force input to the driving unit is transmitted to the motor in a preferable manner via the passive rotational force motor transmission path.

### INDUSTRIAL APPLICABILITY

An electric bicycle of the present invention is capable of traveling with a combination of human driving force and auxiliary driving force that is generated by a motor, and is applicable to various types of electric bicycles executing regenerative operation of the motor.

### REFERENCE MARKS IN THE DRAWINGS

1: electric bicycle
2: frame
2a: head tube
2b: front fork
2c: down tube
2d: seat tube
2e: chain stay
2f: seat stay
3: front wheel
4: rear wheel
5: handlebar
5a, 5b: grip
7: crank
7a: crank shaft
7b: crank arm
7c: serration portion
8: pedal
10: rotation detector
11: rotation detection member
12: battery
13, 13A: front sprocket (driving force output wheel body)
14, 14A : rear sprocket (rotation wheel body, driving force input body, passive rotational force output body)
15, 15A : chain (endless force transmitter)
17: chain cover
19: motor sprocket
20, 20A: driving unit
21, 21A : motor
21a: rotation shaft
21b: rotor unit
22: unit case
22a: motor case
22b: left case
22c: right case
23: linkage cylindrical body
23a, 28a, 28b, 47: serration portion (spline portion)
24, 24A: controller
24a: control board
25, 25A: speed reduction mechanism
26, 27: bearing
28: human force transmitter
29: resultant force transmitter
30: unidirectional clutch
31, 31A: torque sensor
31a: coil
31b: magneto-striction generator
32, 33: motor bearing
34, 35: bearing
36: speed reduction gear
37: first intermediate shaft speed reduction gear
38: second intermediate shaft speed reduction gear
39: motor shaft speed reduction gear
44: intermediate shaft
50, 50A: hub device (rear hub device)
51: hub shaft
52: hub body
52a: spoke flange portion
54: first bearing
54a, 55a, 56a: inner portion
54b, 55b, 56b: outer portion
55: second bearing
56: third bearing
56c: extension portion
57: spoke flange body
58, 58A: force transmission rotation body
58a: extension portion
59: driving force transmission unidirectional clutch
60, 60A: first planetary gear mechanism
61, 66: carrier
62: carrier shaft
63: planetary gear
64: variant cylindrical body
64A: inner gear portion
64a: small-diameter portion
64b: large-diameter portion
65, 65A: second planetary gear mechanism
66A: carrier
67: carrier shaft
68: planetary gear
69A, 69B: sun gear
70: passive rotational force transmission clutch mechanism
71: passive rotation body
71a: small-diameter portion
71b: arm portion
71c: projection
71d: inner gear portion
72: revolution shaft
73: cam body
73a: inner diameter side projection
73b: outer diameter side projection
75: cylindrical rotation body
75a: projection
75b: engaging recess
76: second spring member
80: backward rotation permission mechanism
81: backward rotation body
81a, 81b: right extension portion
81c: space
82: torque limiter
85: backward unidirectional clutch
90A, 90B: brake lever
91A, 91B: brake wire
92: front brake device
93: rear brake device
94: operation unit
95A, 95B: brake switch
X1: driving force transmission path
X2, X2a: passive rotational force speed reduction transmission path
X3, X4: passive rotational force motor transmission path

## Claims

1. An electric bicycle (1) comprising:
a plurality of wheels (3, 4);
a frame (2); and
a driving unit (20) that includes a motor (21),
the electric bicycle (1) being configured to travel with a combination of human driving force generated by pedal force applied from pedals (8) and auxiliary driving force generated by the motor (21), and to transmit passive rotational force to the motor (21) for regeneration, the passive rotational force being applied to the plurality of wheels (3, 4) from a contact surface,
wherein one wheel of the plurality of wheels is provided with a hub device (50, 50A) including:
a hub shaft (51) attachable to the frame (2);
a hub body (52) rotatable around the hub shaft (51), and rotatable with the one wheel (4) as a one-piece body;
a rotation wheel body (14) that outputs the passive rotational force to the driving unit (20); and
a passive rotational force speed reduction transmission path (X2, X2a) at which a speed of the passive rotational force transmitted to the hub body (52) is reduced to a speed lower than a rotation speed of the hub body (52) and the passive rotational force having the reduced speed is transmitted to the rotation wheel body,
**characterized in that**
the driving unit (20) is attached with an auxiliary driving force output wheel body that outputs the auxiliary driving force,
the electric bicycle (1) includes a passive rotational force motor transmission path through which the passive rotational force is transmitted from the auxiliary driving force output wheel body to the motor (21),
the driving unit (20) further includes a speed reduction mechanism (25) which transmit the passive rotational force to the motor (21),
the passive rotational force is transmitted to the motor (21) via the hub device (50, 50A), a rear sprocket (14), a chain (15), a front sprocket (13), a resultant force transmitter (29) and the speed reduction mechanism (25),
the speed reduction mechanism (25) includes
an intermediate shaft (44), a speed reduction gear (36), a first intermediate shaft speed reduction gear (37), a second intermediate shaft speed reduction gear (38), and a motor shaft speed reduction gear (39), and the first and second intermediate shaft speed reduction gears (37, 38) rotate with the intermediate shaft (44) as a one-piece body.

2. The electric bicycle according to claim 1, further comprising a planetary gear mechanism,
wherein, at the passive rotational force speed reduction transmission path (X2, X2a), the speed of the passive rotational force is reduced by the planetary gear mechanism and the passive rotational force having the reduced speed is transmitted to the rotation wheel body (14).

3. The electric bicycle (1) according to claim 1 or 2, wherein the hub device (50, 50A) includes a backward rotation permission mechanism (80) that permits rotation of the hub body (52) in a backward direction of the one wheel (4).

4. The electric bicycle (1) according to any one of claims 1 through 3, wherein
the rotation wheel body (14) also functions as a driving force input body through which at least one driving force of the human driving force and the auxiliary driving force is input to the hub device (50, 50A), and
the rotation wheel body (14) is coupled with the hub body (52) to be rotatable with the hub body (52) as a one-piece body during input of the one driving force.

5. The electric bicycle (1) according to any one of claims 1 through 3, wherein
the rotation wheel body (14) also functions as a driving force input body through which at least one driving force of the human driving force and the auxiliary driving force is input to the hub device (52, 52A), and
the electric bicycle includes a driving force transmission path through which the one driving force input to the rotation wheel body is transmitted to the hub body at a rotation speed ratio different from a speed increase ratio that corresponds to a reciprocal number of a speed reduction ratio at which the passive rotational force is transmitted.

6. The electric bicycle (1) according to any one of claims 1 through 3, wherein
the driving unit (20) is disposed at an intermediate position between a front wheel (3) and a rear wheel (4) included in the plurality of wheels (3, 4), and
force is transmitted between the driving unit (20) and the rotation wheel body via the chain (15).

## Patentansprüche

1. Ein elektrisches Fahrrad (1), enthaltend
einer Mehrzahl von Rädern (3, 4);
einen Rahmen (2); und
eine Antriebseinheit (20), die einen Motor (21) enthält,
wobei das elektrische Fahrrad (1) so konfiguriert ist, dass es mit einer Kombination aus menschlicher Antriebskraft, die durch von Pedalen (8) ausgeübte Pedalkraft erzeugt wird, und Hilfsantriebskraft, die durch den Motor (21) erzeugt wird, fährt, und dass es eine passive Drehkraft zur Regeneration auf den Motor (21) überträgt, wobei die passive Drehkraft von einer Kontaktfläche aus auf die Mehrzahl von Rädern (3, 4) ausgeübt wird,
wobei ein Rad der Mehrzahl von Rädern mit einer Nabenvorrichtung (50, 50A) versehen ist, die aufweist
eine Nabenwelle (51), die an dem Rahmen (2) befestigbar ist;
einen Nabenkörper (52), der um die Nabenwelle (51) drehbar ist und mit dem einen Rad (4) als ein einteiliger Körper drehbar ist;
einen Drehradkörper (14), der die passive Rotationskraft an die Antriebseinheit (20) abgibt; und
einen passiven Drehkraft-Geschwindigkeitsreduktions-Übertragungsweg (X2, X2a), bei dem eine Geschwindigkeit der auf den Nabenkörper (52) übertragenen passiven Drehkraft auf eine Geschwindigkeit reduziert wird, die geringer ist als eine Drehgeschwindigkeit des Nabenkörpers (52), und die passive Drehkraft mit der reduzierten Geschwindigkeit auf den Rotationsradkörper übertragen wird,
**dadurch gekennzeichnet, dass**
die Antriebseinheit (20) ist mit einem Hilfsantriebskraft-Ausgangsradkörper verbunden ist, der die Hilfsantriebskraft ausgibt,
das elektrische Fahrrad (1) einen passiven Drehkraft-Motorübertragungsweg enthält, über den die passive Drehkraft von dem Hilfsantriebskraft-Ausgangsradkörper auf den Motor (21) übertragen wird,
die Antriebseinheit (20) ferner einen Geschwindigkeitsreduzierungsmechanismus (25) enthält, der die passive Drehkraft auf den Motor (21) überträgt,
die passive Drehkraft über die Nabenvorrichtung (50, 50A), ein hinteres Ritzel (14), eine Kette (15), ein vorderes Ritzel (13), einen Resultierenden-Kraft-Übertrager (29) und den Geschwindigkeitsreduktionsmechanismus (25) auf den Motor (21) übertragen wird,
der Geschwindigkeitsreduktionsmechanismus (25) umfasst
eine Zwischenwelle (44), ein Untersetzungsgetriebe (36), ein erstes Zwischenwellenuntersetzungsgetriebe (37), ein zweites Zwischenwellenuntersetzungsgetriebe (38) und ein Motorwellenuntersetzungsgetriebe (39), und
das erste und zweite Zwischenwellenuntersetzungsgetriebe (37, 38) rotieren mit der Zwischenwelle (44) als einteiliger Körper.

2. Das elektrische Fahrrad nach Anspruch 1, ferner enthaltend einen Planetengetriebe-Mechanismus,
wobei bei dem passiven Drehkraft-Geschwindigkeitsreduktions-Übertragungsweg (X2, X2a) die Geschwindigkeit der passiven Drehkraft durch den Planetengetriebemechanismus reduziert wird und die passive Drehkraft mit der reduzierten Geschwindigkeit auf den Drehradkörper (14) übertragen wird.

3. Das elektrische Fahrrad (1) nach Anspruch 1 oder 2, wobei die Nabenvorrichtung (50, 50A) einen Rückwärtsdrehungs-Erlaubnismechanismus (80) enthält, der eine Drehung des Nabenkörpers (52) in einer Rückwärtsrichtung des einen Rades (4) erlaubt.

4. Das elektrische Fahrrad (1) nach einem der Ansprüche 1 bis 3, wobei
der Drehradkörper (14) auch als Antriebskrafteingabekörper funktioniert, durch den mindestens eine Antriebskraft der menschlichen Antriebskraft und der Hilfsantriebskraft in die Nabenvorrichtung (50, 50A) eingegeben wird, und
der Drehradkörper (14) mit dem Nabenkörper (52) gekoppelt ist, um mit dem Nabenkörper (52) als ein einteiliger Körper während der Eingabe der einen Antriebskraft drehbar zu sein.

5. Das elektrische Fahrrad (1) nach einem der Ansprüche 1 bis 3, wobei
der Drehradkörper (14) auch als Antriebskrafteingabekörper funktioniert, durch den mindestens eine Antriebskraft der menschlichen Antriebskraft und der Hilfsantriebskraft in die Nabenvorrichtung (52, 52A) eingegeben wird, und
das elektrische Fahrrad einen Antriebskraft-Übertragungsweg aufweist, über den die eine in den Drehradkörper eingegebene Antriebskraft auf den Nabenkörper mit einem Drehgeschwindigkeitsverhältnis übertragen wird, das sich von einem Geschwindigkeitserhöhungsverhältnis unterscheidet, das einer reziproken Zahl eines Geschwindigkeitsreduktionsverhältnisses entspricht, mit dem die passive Drehkraft übertragen wird.

6. Das elektrische Fahrrad (1) nach einem der Ansprüche 1 bis 3, wobei
die Antriebseinheit (20) an einer Zwischenposition zwischen einem Vorderrad (3) und einem Hinterrad (4), die in der Mehrzahl von Rädern (3, 4) enthalten sind, angeordnet ist, und
Die Kraft wird zwischen der Antriebseinheit (20) und dem Rotationsradkörper über die Kette (15) übertragen.

## Revendications

1. Vélo électrique (1) comprenant :
une pluralité de roues (3, 4) ;
un cadre (2) ; et
une unité d'entraînement (20) qui comprend un moteur (21),
le vélo électrique (1) étant configuré pour se déplacer à l'aide d'une combinaison de force d'entraînement humaine générée par une force de pédales appliquée à partir de pédales (8) et de force d'entraînement auxiliaire générée par le moteur (21), et pour transmettre une force de rotation passive au moteur (21) pour régénération, la force de rotation passive étant appliquée à la pluralité de roues (3, 4) à partir d'une surface de contact,
dans lequel une première roue de la pluralité de roues est munie d'un dispositif de moyeu (50, 50A) comprenant :
un arbre de moyeu (51) pouvant être fixé au cadre (2) ;
un corps de moyeu (52) pouvant tourner autour de l'arbre de moyeu (51), et pouvant tourner avec la première roue (4) en tant que corps monobloc ;
un corps de roue de rotation (14) qui délivre en sortie la force de rotation passive à l'unité d'entraînement (20) ; et
un trajet de transmission de réduction de vitesse de force de rotation passive (X2, X2a) au niveau duquel une vitesse de la force de rotation passive transmise au corps de moyeu (52) est réduite à une vitesse inférieure à une vitesse de rotation du corps de moyeu (52) et la force de rotation passive ayant la vitesse réduite est transmise au corps de roue de rotation,
**caractérisé en ce que**
l'unité d'entraînement (20) est fixée à un corps de roue de sortie de force d'entraînement auxiliaire qui délivre en sortie la force d'entraînement auxiliaire,
le vélo électrique (1) comprend un trajet de transmission moteur de force de rotation passive à travers lequel la force de rotation passive est transmise à partir du corps de roue de sortie de force d'entraînement auxiliaire au moteur (21),
l'unité d'entraînement (20) comprend en outre un mécanisme de réduction de vitesse (25) qui transmet la force de rotation passive au moteur (21),
la force de rotation passive est transmise au moteur (21) via le dispositif de moyeu (50, 50A), à un pignon arrière (14), à une chaîne (15), à un pignon avant (13), à un dispositif de transmission de force résultante (29) et au mécanisme de réduction de vitesse (25), le mécanisme de réduction de vitesse (25) comprend un arbre intermédiaire (44), un engrenage de réduction de vitesse (36), un premier engrenage de réduction de vitesse d'arbre intermédiaire (37), un second engrenage de réduction de vitesse d'arbre intermédiaire (38), et un engrenage de réduction de vitesse d'arbre moteur (39), et
les premier et second engrenages de réduction de vitesse d'arbre intermédiaire (37, 38) tournent avec l'arbre intermédiaire (44) sous forme d'un corps monobloc.

2. Vélo électrique selon la revendication 1, comprenant en outre un mécanisme d'engrenage planétaire,
dans lequel, au niveau du trajet de transmission de réduction de vitesse de force de rotation passive (X2, X2a), la vitesse de la force de rotation passive est réduite par le mécanisme d'engrenage planétaire et la force de rotation passive ayant la vitesse réduite est transmise au corps de roue de rotation (14).

3. Vélo électrique (1) selon la revendication 1 ou 2, dans lequel le dispositif de moyeu (50, 50A) comprend un mécanisme d'autorisation de rotation arrière (80) qui permet une rotation du corps de moyeu (52) dans une direction arrière de la première roue (4).

4. Vélo électrique (1) selon l'une quelconque des revendications 1 à 3, dans lequel
le corps de roue de rotation (14) fonctionne également comme un corps d'entrée de force d'entraînement à travers lequel au moins une force d'entraînement parmi la force d'entraînement humaine et la force d'entraînement auxiliaire est entrée dans le dispositif de moyeu (50, 50A), et
le corps de roue de rotation (14) est couplé au corps de moyeu (52) pour pouvoir tourner avec le corps de moyeu (52) en tant que corps monobloc pendant l'entrée de la première force d'entraînement.

5. Vélo électrique (1) selon l'une quelconque des revendications 1 à 3, dans lequel
le corps de roue de rotation (14) fonctionne également comme un corps d'entrée de force d'entraînement à travers lequel au moins une force d'entraînement parmi la force d'entraînement humaine et la force d'entraînement auxiliaire est entrée dans le dispositif de moyeu (52, 52A), et
le vélo électrique comprend un trajet de transmission de force d'entraînement à travers lequel la première force d'entraînement entrée dans le corps de roue de rotation est transmise au corps de moyeu à un rapport de vitesse de rotation différent d'un rapport d'augmentation de vitesse qui correspond à un nombre réciproque d'un rapport de réduction de vitesse auquel la force de rotation passive est transmise.

6. Vélo électrique (1) selon l'une quelconque des revendications 1 à 3, dans lequel l'unité d'entraînement (20) est disposée à une position intermédiaire entre une roue avant (3) et une roue arrière (4) incluses dans la pluralité de roues (3, 4), et
une force est transmise entre l'unité d'entraînement (20) et le corps de roue de rotation via la chaîne (15).
